Europäisches Patentamt

(19) European Patent Office

Office européen des brevets

(11) Numéro de publication: **0 118 079**
**A1**

(12) **DEMANDE DE BREVET EUROPEEN**

(21) Numéro de dépôt: **84101826.0**

(22) Date de dépôt: **22.02.84**

(51) Int. Cl.³: **B 29 J 5/08**
**B 29 F 3/08**

(30) Priorité: **25.02.83 FR 8303299**

(43) Date de publication de la demande:
**12.09.84 Bulletin 84/37**

(84) Etats contractants désignés:
**AT BE CH DE FR GB IT LI LU NL SE**

(71) Demandeur: **Di Meo, Robert**
**7, rue du Nord**
**F-68320 Urschenheim(FR)**

(71) Demandeur: **Pelissier, Jean-Pierre**
**6, rue Salvatore Allende**
**F-69100 Villeurbanne(FR)**

(72) Inventeur: **Di Meo, Robert**
**7, rue du Nord**
**F-68320 Urschenheim(FR)**

(72) Inventeur: **Pelissier, Jean-Pierre**
**6, rue Salvatore Allende**
**F-69100 Villeurbanne(FR)**

(74) Mandataire: **Nithardt, Roland**
**CABINET ROLAND NITHARDT 12, rue du 17 Novembre**
**F-68100 Mulhouse(FR)**

(54) **Procédé de fabrication d'un profilé moulé en particules ou fibres minérales, végétales ou synthétiques et dispositif pour la mise en oeuvre de ce procédé.**

(57) La présente invention concerne un procédé de fabrication d'un profilé moulé en particules ou fibres minérales, végétales ou synthétiques mélangées à au moins un liant synthétique thermodurcissable et le dispositif pour la mise en oeuvre de ce procédé.

Le dispositif comporte un moule chauffant (10) en forme de tunnel, dont la section intérieure correspond au moins dans la zone de durcissement du mélange à celle du profilé (13) que l'on veut fabriquer, et des moyens (11) pour pousser en continu ou alternativement le mélange à travers le moule (10) et au moins un générateur (18) de micro-ondes, monté sur les parois du moule (10) dans la zone de durcissement.

Utilisation : fabrication de profilés en particules végétales notamment déchets de bois tels que sciure et copeaux, fibres textiles et particules minérales telles que sable ou similaire.

FIG. 1

PROCEDE DE FABRICATION D'UN PROFILE MOULE EN PARTICULES OU FIBRES MINE-
RALES, VEGETALES OU SYNTHETIQUES ET DISPOSITIF POUR LA MISE EN OEUVRE
DE CE PROCEDE

La présente invention concerne un procédé de fabrication d'un profilé
moulé en particules ou fibres minérales, végétales ou synthétiques
mélangées à au moins un liant synthétique, thermodurcissable, dans lequel on introduit le mélange de particules et de liant,
dans un moule chauffant en forme de tunnel, dont la section intérieure
correspond, au moins dans la zone de durcissement du mélange, à celle
du profilé que l'on veut fabriquer, et dans lequel on pousse en continu
ou par intermittance le mélange à travers le moule.

Cette invention concerne également un dispositif pour la fabrication
d'un profilé moulé en particules ou fibres minérales, végétales
ou synthétiques mélangées à au moins un liant synthétique
thermodurcissable, ce dispositif comportant un moule chauffant en forme
de tunnel dont la section intérieure correspond au moins dans la zone
de durcissement du mélange à celle du profilé que l'on veut fabriquer,
et des moyens pour pousser en continu ou alternativement le mélange
à travers le moule.

On connaît déjà des procédés et des dispositifs de ce type, notamment
ceux décrits dans le brevet français n° 2 208 781 qui utilisent un moule
comportant un canal de durcissement dont les parois, constituées par
un cube métallique, sont chauffées par des résistances électriques.
L'inconvénient d'un tel dispositif réside dans le fait que toute la
chaleur nécessaire au durcissement du liant est transmise par les parois
du moule et progresse depuis les couches périphériques vers l'intérieur
de la matière à traiter, ce qui peut nécessiter des tunnels de chauffage
relativement longs, notamment lorsque le profil que l'on veut fabriquer
a une section importante.

La présente invention se propose de pallier cet inconvénient en développant un procédé dont la mise en oeuvre peut se faire au moyen d'un
dispositif compact peu encombrant et en définitive particulièrement
économique tant au point de vue de sa construction qu'au point de vue
de son utilisation et notamment de sa consommation en énergie.

Dans ce but, le procédé selon l'invention est caractérisé en ce que l'on chauffe le mélange au moyen de micro-ondes au cours de son passage dans ladite zone de durcissement.

Le dispositif pour la mise en oeuvre de ce procédé est caractérisé en ce qu'il comporte également au moins un générateur de micro-ondes monté sur les parois du moule dans ladite zone de durcissement.

Selon une forme de réalisation préférée, l'on utilise plusieurs générateurs de micro-ondes, de préférence montés face à face ou de façon alternée sur au moins deux parois opposées du moule dans ladite zone de durcissement, ces générateurs émettant de façon séquentielle et alternée.

Le dispositif est avantageusement conçu de telle manière que le moule comporte trois tronçons disposés successivement dans le sens du déplacement de la matière à traiter, soit un tronçon d'introduction du mélange, un tronçon de traitement correspondant à ladite zone de durcissement, et un tronçon de stabilisation, ces trois tronçons ayant une section correspondant à celle du profil à fabriquer.

Pour permettre le chauffage au moyen de micro-ondes, le moule comporte au moins une fenêtre réalisée en un matériau étanche au mélange à traiter et perméable aux micro-ondes, cette fenêtre étant ménagée dans le tronçon de traitement du moule et correspondant à un générateur de micro-ondes. Toutefois, le moule comporte de préférence plusieurs fenêtres disposées le long de son tronçon de traitement, chaque fenêtre correspondant à un générateur de micro-ondes, et ces fenêtres étant ménagées dans au moins deux parois opposées du moule, en regard deux à deux ou de façon alternée.

Pour faciliter la progression de la matière à traiter à travers le tunnel, le moule comporte avantageusement un revêtement intérieur réalisé en un matériau ayant un faible coefficient de frottement et résistant aux micro-ondes, à la température, à la pression de traitement et aux agents chimiques contenus dans le mélange à traiter.

Pour faciliter la mise en route du dispositif, le moule comporte de préférence des moyens de chauffage agencés pour chauffer les parois du tronçon de traitement pendant la phase de mise en route.

Dans le but de limiter la dispersion de l'énergie de chauffage par rayonnement, le moule comporte de préférence une enveloppe isolante ménagée le long du tronçon de traitement.

Par contre, dans le but d'accroître la vitesse de la stabilisation, le moule peut comporter des organes de refroidissement ménagés le long des parois du tronçon de stabilisation. Ces organes de refroidissement peuvent comporter des ailettes soumises à une ventilation forcée. En outre, le moule peut comporter un tronçon métallique, faisant office d'écran, monté entre le tronçon de traitement et le tronçon de stabilisation, afin de bien séparer ces deux tronçons et de constituer un tampon thermique entre eux.

La présente invention ainsi que ses principaux avantages seront mieux compris en référence à la description d'exemples de réalisation et du dessin annexé dans lequel :

La figure 1 représente une vue schématique d'une coupe axiale partielle du dispositif selon l'invention,

La figure 2 représente une vue partielle en perspective illustrant une forme de montage des générateurs de micro-ondes du dispositif selon l'invention,

La figure 3 représente une vue en coupe transversale à travers le tronçon de traitement du moule du dispositif selon l'invention,

La figure 4 représente une vue en coupe transversale à travers une autre forme de réalisation du moule du dispositif selon l'invention, et

La figure 5 représente une vue partielle en coupe axiale de la zone de raccordement entre le tronçon de traitement et le tronçon de stabilisation du moule du dispositif selon l'invention.

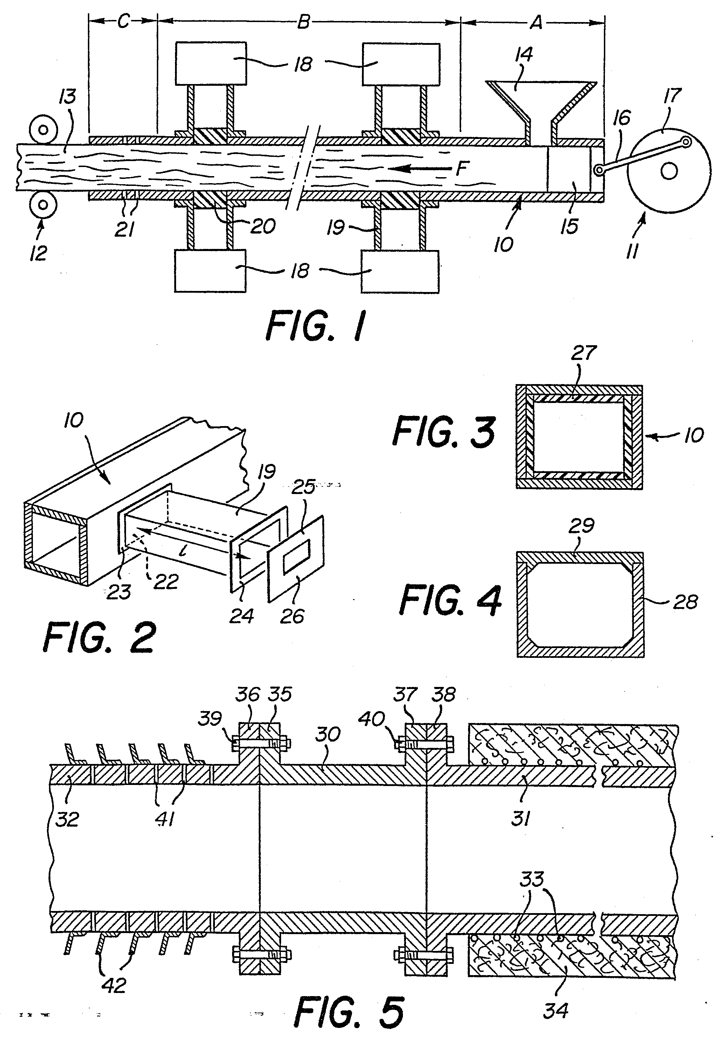

En référence à la figure 1, le dispositif selon l'invention se compose essentiellement d'un moule 10 ayant la forme d'un tunnel longitudinal dont les extrémités sont ouvertes, d'un dispositif de compression 11 dont le but est de faire progresser les matériaux contenus dans le moule 10 dans le sens de la flèche F, et un dispositif 12 permettant de freiner l'avance du produit 13 sortant du moule après son durcissement.

Le moule 10 se compose essentiellement de trois tronçons A, B et C appelés respectivement tronçon d'introduction, tronçon de traitement et tronçon de stabilisation. Le tronçon d'introduction comporte un entonnoir 14 par où est déversé le mélange de particules végétales composé de préférence de sciure et de copeaux et de liant synthétique, qui est ensuite repoussé par un piston 15 relié par une bielle 16 à une roue à excentrique 17. Ce tronçon a, au moins dans sa zone située au-delà de l'entonnoir 14, une section identique en forme et en dimension à la section du profilé 13 que l'on souhaite fabriquer à l'aide du dispositif décrit. Le tronçon B a pour but d'assurer le durcissement du liant synthétique, et comporte à cet effet un ensemble de générateurs de micro-ondes 18 montés par exemple sur des supports tubulaires fixés le long de deux parois opposées du moule 10, et communiquant avec l'intérieur du tunnel dans lequel circulent les produits à traiter, au moyen de fenêtres obturées par des blocs 20 perméables aux micro-ondes. Ces blocs 20 affleurent les parois intérieures du moule 10, de telle manière que les produits à traiter ne rencontrent aucune protubérance faisant obstacle à leur progression.

Le tronçon de stabilisation C sert à refroidir le profilé ayant subi un traitement thermique dans la zone de durcissement correspondant au tronçon de traitement B. A cet effet, il comporte avantageusement des évents 21 ménagés dans les parois du moule.

Sur la figure 1, le dispositif de poussée 11 est en fonctionnement alternatif. On peut envisager de remplacer ce dispositif par une vis sans fin qui assure une progression continue des matériaux à travers le moule 10, et non plus une progression par à-coups comme c'est le cas avec le dispositif représenté.

La figure 2 illustre plus particulièrement un mode de montage d'un générateur à micro-ondes (non représenté). Comme précédemment, les parois latérales du moule 10 comportent au moins une fenêtre 22 sur laquelle est montée un support tubulaire 19 solidaire de deux flasques 23 et 24. Le flasque 23 permet le montage du support 19 sur l'une des parois du moule. L'autre flasque 24 localisé à l'autre extrémité du support 19 permet le montage du générateur à ultra-sons. Une plaque métallique 25 comportant une ouverture centrale 26, disposée entre le flasque 24 et le générateur à micro-ondes (non représenté), sert d'appui à un bloc perméable aux micro-ondes, logé à l'intérieur du support 19. Ce bloc peut être réalisé en quartz, en polypropylène ou en polytétrafluoréthylène commercialisé sous la marque téflon®. La longueur 1 de ce bloc est égale à $\lambda$g/2 où $\lambda$g désigne la longueur d'onde des micro-ondes utilisées, dans un guide rectangulaire standard rempli de matériaux cités précédemment. A titre d'exemple, pour une fréquence de 2 450 MHz, 1 est de l'ordre de 2 à 4 cm selon le matériau utilisé. Les dimensions de l'ouverture 26 ménagée dans la plaque 25 sont choisies de telle manière qu'elles n'introduisent aucune réflexion dans le guide d'ondes. La self-induction équivalente compense la capacité équivalente de façon qu'à la fréquence de travail, LC $\omega^2$ = 1.

La figure 2 représente une vue en coupe transversale d'une forme de réalisation du moule 10, cette coupe étant effectuée dans la zone B de la figure 1, c'est-à-dire dans la zone de durcissement. Les parois du moule comportent un revêtement intérieur 27 réalisé en un matériau ayant un faible coefficient de frottement tel que par exemple le polytétrafluoréthylène connu sous la marque téflon®.

La figure 4 représente un moule se composant d'un profil 28 en forme de U et d'un couvercle 29, destinés à réaliser un profilé de section carrée ou rectangulaire dont les arêtes sont cassées. Le moule illustré par la figure 5 comporte, outre les composants déjà décrits précédemment, un tronçon 30 ménagé entre un tronçon de traitement 31 et un tronçon de stabilisation 32. Ce tronçon 30 est réalisé de préférence en acier inoxydable dont la faible conductibilité thermique s'oppose au transfert de chaleur entre le tronçon de traitement 31 et le tronçon de stabilisation 32. Ce tronçon intermédiaire a le même profil et les mêmes dimensions que ses tronçons voisins 31 et 32.

Pour favoriser le démarrage du durcissement, les parois du tronçon de traitement 31 peuvent être réchauffées à l'aide d'un dispositif de chauffage quelconque tel que par exemple une résistance chauffante 33. Une enveloppe isolante 34 entoure de préférence le moule dans sa zone de durcissement, correspondant au tronçon de traitement 31, pour éviter le gaspillage d'énergie par rayonnement de la chaleur émise par les parois du moule.

Le tronçon 32 que l'on isole thermiquement du tronçon 31 au moyen du tronçon intermédiaire, monté par exemple grâce aux flasques 35, 36 et 37, 38 et fixé à l'aide de boulons 39 et 40, comporte avantageusement une série d'évents 41 constitués par des ouvertures radiales traversant les parois du moule. Des ailettes de refroidissement 42 éventuellement ventilées par un courant d'air forcé, favorisent le refroidissement du tronçon de stabilisation 32. Ces différentes mesures ne sont pas obligatoires mais permettent d'améliorer considérablement le rendement du dispositif décrit.

Lors de la réalisation d'un profilé par agglomération de copeaux et de sciure au moyen d'une colle thermodurcissable, il est nécessaire que le tronçon de stabilisation 32 ait une longueur sensiblement égale à celle du tronçon de traitement. En effet, dans ce tronçon la température du produit peut atteindre, voire dépasser 100° C. Il s'ensuit l'apparition d'une pression de vapeur qui serait susceptible de faire éclater ce profilé si celui-ci débouchait immédiatement à l'air libre à la sortie du tronçon de traitement. La présence du tronçon de stabilisation permet d'abaisser la température du produit en dessous de 100°C. Cette chute de température est provoquée principalement par une perte de vapeur d'eau du profilé. Pour favoriser cette déperdition d'eau, il est avantageux de prévoir des évents ou ouvertures radiales ménagés à travers les parois du moule, ces évents ayant de préférence un diamètre de l'ordre de 2 mm. Comme mentionné précédemment, ce refroidissement est encore favorisé par la présence des ailettes 42 ventilées.

Le dispositif de compression décrit en référence à la figure 1, est amovible ou est relié au moule par une bride amovible qui facilite le nettoyage et l'entretien du dispositif.

L'avance du produit se fait de façon discontinue ou continue à raison de 15 mm par seconde. Il est nécessaire de prévoir en amont du tronçon de traitement un tronçon d'introduction d'au moins 50 cm pour permettre la stabilisation de la pression.

Les générateurs de micro-ondes utilisent un redressement mono alternance doubleur. Cette technologie permet de les faire fonctionner de façon séquentielle. On diminue ainsi les interactions des générateurs entre eux.

Pour maintenir en pression le produit à traiter, on place, à la sortie du système, des galets presseurs s'opposant à son avancement. Les réglages du piston d'alimentation et des galets presseurs permettent de définir une pression de travail pouvant atteindre 30 kg/cm$^2$.

Le dispositif décrit peut s'employer chaque fois que l'on désire chauffer dans la masse un produit se présentant comme un bon isolant thermique. Il permet de réaliser des profilés de sections quelconques : carrée, rectangulaire, circulaire ou présentant n'importe quelle autre forme géométrique.

Calculons à titre d'exemple la puissance nécessaire pour la reconstitution d'un profilé composé de sciure et de copeaux agglomérés par de la colle, ayant une section carrée de 80 X 80 mm à angles cassés et avançant à une vitesse de un mètre par minute.
Compte tenu des dimensions de l'échantillon, la fréquence utilisée est de 2 450 MHz avec un moule dont la section correspond au schéma de la figure 4.

Si l'on admet que la chaleur spécifique C du bois est de l'ordre de 0,5 calorie/g, l'application de la formule $4,18. m . C \Delta \theta = P$, où m représente la masse de matière ( exprimée en g ) traitée par seconde et $\Delta \theta$ l'élévation de température de la matière traitée, permet de déterminer la puissance micro-ondes P installée.

Dans ce cas, P = 16 Kw. On emploiera 20 générateurs de 800 W. Cette technologie permet d'une part d'utiliser des générateurs bon marché, d'autre part, de mieux répartir la puissance micro-ondes le long de la zone de durcissement.

Dans le cadre de cette invention, d'autres fréquences de micro-ondes peuvent être utilisées, notamment une fréquence de 915 MHz et une fréquence de 434 MHz, selon les sections des profilés que l'on veut fabriquer. Ces trois fréquences sont les seules autorisées par la loi pour les applications industrielles des rayonnements électromagnétiques. On a avantage à faire fonctionner le tronçon de guide-ondes servant au chauffage de la matière à traiter, dans la zone appelée par la suite zone de durcissement, sur le mode fondamental des guide-ondes. En effet, ce mode est celui qui possède la répartition du champ électrique la plus intéressante pour réaliser un chauffage homogène. Dans certains cas toutefois, on peut utiliser le tronçon de traitement comme une cavité multi-modes. L'homogénéité de répartition est plus faible mais le chauffage sera néanmoins homogène du fait de la progression de l'échantillon.

La présente invention peut subir différentes modifications et se présenter sous diverses variantes évidentes pour l'homme de l'art.

Revendications

1. Procédé de fabrication d'un profilé moulé en particules
ou fibres minérales, végétales ou synthétiques mélangées à
au moins un liant synthétique thermodurcissable, dans lequel on introduit le mélange de particules et de liant dans un moule en forme
de tunnel dont la section intérieure correspond, au moins dans la zone
de durcissement du mélange, à celle du profilé que l'on veut fabriquer,
et dans lequel on pousse en continu ou par intermitence le mélange à
travers le moule, caractérisé en ce que l'on chauffe le mélange au
moyen de micro-ondes au cours de son passage dans ladite zone de
durcissement.

2. Procédé selon la revendication 1, caractérisé en ce que l'on utilise
plusieurs générateurs de micro-ondes émettant de façon séquentielle
et alternée.

3. Dispositif pour la fabrication d'un profilé moulé en particules
ou fibres minérales, végétales ou synthétiques
mélangées à au moins un liant synthétique thermodurcissable, comportant
un moule chauffant (10) en forme de tunnel, dont la section intérieure
correspond au moins dans la zone de durcissement du mélange à celle
du profilé (13) que l'on veut fabriquer, et des moyens (11) pour pousser
en continu ou alternativement le mélange à travers le moule (10),
caractérisé en ce qu'il comporte au moins un générateur (18) de micro-
ondes, monté sur les parois du moule (10) dans ladite zone de durcissement (B).

4. Dispositif selon la revendication 3, caractérisé en ce que le moule
comporte trois tronçons disposés successivement dans le sens du déplacement de la matière à traiter, soit un tronçon d'introduction (A) du mélange, un tronçon de traitement (B) correspondant à la zone de durcissement de ce mélange, et un tronçon de stabilisation (C), ces trois tronçons ayant une section correspondant à celle du profilé à fabriquer.

5. Dispositif selon la revendication 3, caractérisé en ce que le moule
comporte au moins une fenêtre (22), obturée par un matériau étanche au mélange à traiter et perméable aux micro-ondes, cette fenêtre étant ménagée dans le tronçon de traitement (B) du moule (10),et correspondant à un générateur de micro-ondes (18).

6. Dispositif selon la revendication 4, caractérisé en ce que le moule (10) comporte plusieurs fenêtres, disposées le long de son tronçon de traitement (B), chaque fenêtre correspondant à un générateur de micro-ondes (18), ces fenêtres étant ménagées dans deux parois opposées du moule, en regard deux à deux ou de façon alternée.

7. Dispositif selon la revendication 3, caractérisé en ce que le moule comporte un revêtement intérieur (27), réalisé en un matériau ayant un faible coefficient de frottement et résistant au micro-ondes, à la température et à la pression de traitement, ainsi qu'aux agents chimiques contenus dans le mélange à traiter.

8. Dispositif selon la revendication 4, caractérisé en ce que le tronçon de stabilisation (C) comporte des évents (21 ,41), ménagés dans les parois du moule.

9. Dispositif selon la revendication 3, caractérisé en ce que le moule comporte des moyens de chauffage (33), agencés pour chauffer les parois du tronçon de traitement (B) pendant la phase de mise en route du dispositif.

10. Dispositif selon la revendication 9, caractérisé en ce que le moule comporte une enveloppe isolante (34), disposée au moins le long du tronçon de traitement (B).

11. Dispositif selon la revendication 4, caractérisé en ce que le moule comporte des organes de refroidissement disposés le long des parois du tronçon de stabilisation (C).

12. Dispositif selon la revendication 11, caractérisé en ce que les organes de refroidissement comportent des ailettes (42), soumises à une ventilation forcée.

13. Dispositif selon la revendication 4, caractérisé en ce que le moule comporte un tronçon métallique (30), faisant office de tampon thermique, monté entre le tronçon de traitement (B) et le tronçon de
stabilisation (C).

14. Profilé obtenu selon le procédé de la revendication 1, comportant
l'un quelconque des matériaux suivants : particules végétales notamment déchets de bois tels que sciure et copeaux, fibres textiles, particules minérales telles que sable ou similaire.

0118079

FIG. 1

FIG. 2

FIG. 3

FIG. 4

FIG. 5

Office européen
des brevets

**RAPPORT DE RECHERCHE EUROPEENNE**

0118079
~~Numéro de la demande~~

EP   84 10 1826

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| X,Y | DE-A-2 539 674   (KCE KISS)<br><br>* Figure 3; page 9 * | 1-3,9, 14 | B 29 J   5/08<br>B 29 F   3/08 |
| | --- | | |
| Y | US-A-3 551 199   (FORSTER)<br>* En entier * | 1-3,7 | |
| | --- | | |
| Y | FR-A-2 410 803   (BECK)<br>* En entier * | 1-3 | |
| | --- | | |
| Y | US-A-3 553 413   (SOULIER)<br>* En entier * | 1-3,7 | |
| | --- | | |
| Y | FR-A-2 070 628   (KRIZ)<br>* En entier * | 1-3 | |

DOMAINES TECHNIQUES RECHERCHES (Int. Cl. 3)

| | | | |
|---|---|---|---|
| | --- | | |
| A | DE-A-2 947 486   (BEISS)<br>* En entier * | 1 | |
| | --- | | B 29 F   3/00<br>B 29 J   5/00 |
| A | DE-A-2 926 223   (P. TROESTER)<br>* En entier * | 1 | H 05 B   6/00<br>B 27 D   1/00 |
| | ----- | | |

Le présent rapport de recherche a été établi pour toutes les revendications

| Lieu de la recherche<br>LA HAYE | Date d'achèvement de la recherche<br>29-05-1984 | Examinateur<br>KUSARDY R. |
|---|---|---|